# FASCICULE DE BREVET EUROPEEN

(11) **EP 4 491 058 B1**
(45) Date de publication et mention de la délivrance du brevet: **14.01.2026**
(21) Numéro de dépôt: 23184361.6
(22) Date de dépôt: 10.07.2023
(51) Int. Cl.: A44C 5/02

(54) **ENSEMBLE CHARNIÈRE D'HORLOGERIE OU DE BIJOUTERIE-JOAILLERIE**
SCHARNIERANORDNUNG FÜR UHR ODER SCHMUCK
HINGE ASSEMBLY FOR TIMEPIECE OR JEWELLERY

(43) Date de publication de la demande: 15.01.2025
(73) Titulaire: Harry Winston SA, 1228 Plan-les-Ouates (CH)
(72) Inventeur: HUMBERT, Marc, 1288 Aire-La-Ville (CH)
(74) Mandataire: ICB SA

(56) Documents cités:
- EP-A1- 2 915 445
- FR-A1- 2 627 677
- US-A1- 2010 309 755
- US-B1- 9 068 382

## Description

### Domaine technique de l'invention

L'invention concerne un ensemble charnière d'horlogerie ou de bijouterie-joaillerie comportant d'une part une charnière extérieure avec une première chape et une deuxième chape solidaires d'une semelle extérieure et comportant respectivement un premier alésage et un deuxième alésage alignés selon un axe, et d'autre part une charnière intérieure avec une chape unique solidaire d'une semelle intérieure et insérable à jeu minimal entre ladite première chape et ladite deuxième chape et comportant un troisième alésage apte à être aligné selon ledit axe avec ledit premier alésage et ledit deuxième alésage dans une position de fonctionnement, où ladite charnière extérieure et ladite charnière intérieure sont montées pivotantes l'une par rapport à l'autre autour d'une vis, au travers, d'une part d'un tube de guidage de ladite vis agencé pour être inséré dans ledit premier alésage et comportant des premiers moyens d'indexation angulaire agencés pour coopérer avec des premiers moyens complémentaires d'indexation angulaire que comporte ladite charnière extérieure au niveau de ladite première chape, et d'autre part d'un tube-écrou agencé pour être inséré dans ledit deuxième alésage, ladite vis comportant une tête pour son immobilisation axiale dans ledit tube de guidage et un filetage agencé pour coopérer avec un taraudage que comporte ledit tube-écrou, la coopération entre ledit filetage et ledit taraudage permettant de régler le jeu ou le serrage axial entre ladite charnière extérieure et ladite charnière intérieure.

L'invention concerne le domaine des fixations articulées pour pièces d'horlogerie ou de bijouterie-joaillerie, et en particuliers des charnières de sécurité.

### Arrière-plan technologique

On connaît des charnières de petite taille, comportant une charnière extérieure à chape double, et une charnière intérieure à chape simple, où la friction de la charnière peut être augmentée en serrant une vis de charnière qui maintient ensemble la charnière extérieure et la charnière intérieure, et qui constitue un arbre de guidage en pivotement.

La tenue à la fatigue n'est souvent pas bien assurée pour des charnières de très petite taille, telles que celles qu'on utilise en horlogerie ou bijouterie-joaillerie, avec des diamètres de corps de guidage, au niveau des chapes, inférieurs à 2 millimètres. La charnière extérieure forme en général un U, et les zones de contraintes en flexion, aux sommets intérieurs du U, obligent souvent à surdimensionner les charnières, ce qui n'est pas toujours compatible avec la pièce d'horlogerie ou bijouterie-joaillerie qui comporte cette charnière.

De plus, aux contraintes en flexion dans un plan passant par l'axe de charnière, s'ajoutent des contraintes en torsion, générées par la coopération d'une vis axiale et de son écrou. Enfin, les frictions dans les alésages des chapes entraînent rapidement une usure qui ne doit pas être négligée, surtout pour des pièces de haut de gamme ou de luxe, qui peuvent comporter des organes mobiles en matériaux titrables, notamment en alliages d'or ou/et de platine, ou similaires, et porter des pierres précieuses ou autres gemmes. Le document EP 2 915 445 A1 divulgue un ensemble charnière selon le préambule de la revendication 1.

Il s'agit donc d'assurer la sécurité de fonctionnement, sur le long terme, d'une telle charnière.

### Résumé de l'invention

L'invention se propose de fournir une charnière de très petites dimensions, agencée pour résister aux efforts de flexion, de torsion et à l'usure, et pour apporter toute sécurité à l'utilisateur.

A cet effet, l'invention concerne un ensemble charnière d'horlogerie ou de bijouterie-joaillerie comportant d'une part une charnière extérieure avec une première chape et une deuxième chape solidaires d'une semelle extérieure et comportant respectivement un premier alésage et un deuxième alésage alignés selon un axe, et d'autre part une charnière intérieure avec une chape unique solidaire d'une semelle intérieure et insérable à jeu minimal entre ladite première chape et ladite deuxième chape et comportant un troisième alésage apte à être aligné selon ledit axe avec ledit premier alésage et ledit deuxième alésage dans une position de fonctionnement, où ladite charnière extérieure et ladite charnière intérieure sont montées pivotantes l'une par rapport à l'autre autour d'une vis, au travers, d'une part d'un tube de guidage de ladite vis agencé pour être inséré dans ledit premier alésage et comportant des premiers moyens d'indexation angulaire agencés pour coopérer avec des premiers moyens complémentaires d'indexation angulaire que comporte ladite charnière extérieure au niveau de ladite première chape, et d'autre part d'un tube-écrou agencé pour être inséré dans ledit deuxième alésage, ladite vis comportant une tête pour son immobilisation axiale dans ledit tube de guidage et un filetage agencé pour coopérer avec un taraudage que comporte ledit tube-écrou, la coopération entre ledit filetage et ledit taraudage permettant de régler le jeu ou le serrage axial entre ladite charnière extérieure et ladite charnière intérieure.

Selon l'invention, ledit tube-écrou comporte des deuxièmes moyens d'indexation angulaire agencés pour coopérer avec des deuxièmes moyens complémentaires d'indexation angulaire que comporte ladite charnière extérieure au niveau de ladite deuxième chape.

Un autre aspect de l'invention concerne la réalisation du tube-écrou et/ou dudit tube de guidage en polyamide 11 ou en polyamide 6-6 ou en polytétrafluoroéthylène ou en polyéthylène à haute densité.

### Brève description des figures

Les buts, avantages et caractéristiques de l'invention apparaîtront mieux à la lecture de la description détaillée qui va suivre, en référence au dessin annexé, où:

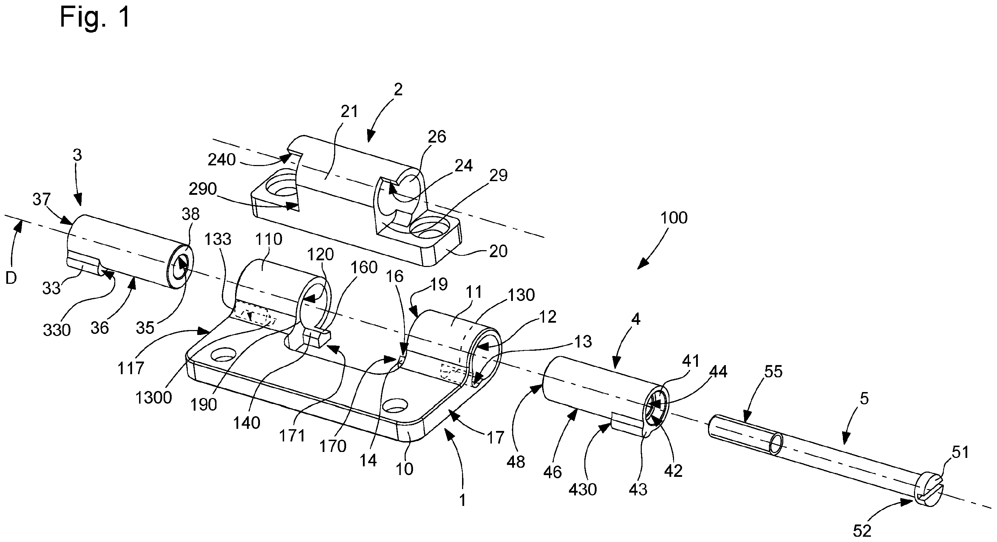

- la figure 1 illustre schématiquement, en perspective éclatée, une charnière selon l'invention.

### Description détaillée de l'invention

La figure 1 montre une représentation schématique d'un ensemble charnière d'horlogerie ou de bijouterie-joaillerie 100 selon l'invention.

Cet ensemble charnière 100 comporte, d'une part une charnière extérieure 1 avec une première chape 11 et une deuxième chape 110 solidaires d'une semelle extérieure 10 et comportant respectivement un premier alésage 12 et un deuxième alésage 120 alignés selon un axe D, et d'autre part une charnière intérieure 2 avec une chape unique 21 solidaire d'une semelle intérieure 20 et insérable à jeu minimal entre la première chape 11 et la deuxième chape 110.

Cette chape unique 21 comporte un troisième alésage 26 qui est apte à être aligné selon le axe D avec le premier alésage 12 et le deuxième alésage 120 dans une position de fonctionnement, où la charnière extérieure 1 et la charnière intérieure 2 sont montées pivotantes l'une par rapport à l'autre autour d'une vis 5, au travers, d'une part d'un tube de guidage 4 de la vis 5 agencé pour être inséré dans le premier alésage 12, et d'autre part d'un tube-écrou 3 agencé pour être inséré dans le deuxième alésage 120.

Le tube de guidage 4 comporte des premiers moyens d'indexation angulaire 43, qui sont agencés pour coopérer avec des premiers moyens complémentaires d'indexation angulaire 13 que comporte la charnière extérieure 10 au niveau de la première chape 11. La vis 5 comporte une tête 51 pour son immobilisation axiale dans le tube de guidage 4, et un filetage 55 qui est agencé pour coopérer avec un taraudage 35 que comporte le tube-écrou 3. La coopération entre le filetage 55 et le taraudage 35 permet de régler le jeu ou le serrage axial entre la charnière extérieure 10 et la charnière intérieure 20. Plus particulièrement, la tête 51 de la vis 5 comporte une surface d'appui plane 52, qui est agencée pour coopérer en appui de butée avec un lamage 42 aménagé au fond d'un chambrage 41, autour de l'alésage 44 aménagé pour le passage de la vis 5 dans le tube de guidage 4. De préférence, en position de fonctionnement, la surface externe de la tête de vis 51 est en retrait par rapport à la face frontale du tube de guidage 4, ou en affleurement, et cette face frontale du tube de guidage 4 est elle-même en retrait ou en affleurement par rapport à une première face frontale 17 de la charnière extérieure 1. De la même façon, une face frontale 37 du tube-écrou 3 est aussi en retrait ou en affleurement par rapport à une deuxième face frontale 117 de la charnière extérieure 1. A l'état libre, sans la vis, une première surface frontale intérieure 48 du tube de guidage 4 est distante d'une deuxième surface frontale intérieure 38 du tube-écrou 3; leur mise en contact éventuel lors du serrage de la vis 5 dans le taraudage 35 prévient toute dégradation de la charnière, en interdisant la poursuite du serrage.

Selon l'invention, le tube-écrou 3 comporte des deuxièmes moyens d'indexation angulaire 33, qui sont agencés pour coopérer avec des deuxièmes moyens complémentaires d'indexation angulaire 133 que comporte la charnière extérieure 10 au niveau de la deuxième chape 110.

Plus particulièrement, le tube de guidage 4 comporte des premiers moyens d'arrêt axial 430, qui sont agencés pour coopérer avec des premiers moyens complémentaires d'arrêt axial 130 que comporte la charnière extérieure 10 au niveau de la première chape 11.

Plus particulièrement, le tube de guidage 4 comporte un premier corps cylindrique 46 insérable dans le premier alésage 12 de la première chape 11, et les premiers moyens d'indexation angulaire 43 comportent un premier bossage radial du tube de guidage 4, et sont saillants radialement par rapport au premier corps cylindrique 46, et sont agencés pour coopérer avec une première encoche radiale de la première chape 11 que comportent les premiers moyens d'indexation angulaire complémentaire 13.

Plus particulièrement encore, le premier bossage radial porte frontalement les premiers moyens d'arrêt axial 430, et les premiers moyens complémentaires d'arrêt axial 130 de la première chape 11 comportent une première portée frontale au niveau en extrémité intérieure de la première encoche radiale, laquelle est borgne, de la première chape 11.

Plus particulièrement, le tube-écrou 3 comporte un deuxième corps cylindrique 36 insérable dans le deuxième alésage 120 de la deuxième chape 110, et les deuxièmes moyens d'indexation angulaire 33 comportent un deuxième bossage radial du tube-écrou 3, et sont saillants par rapport au deuxième corps cylindrique 36, et sont agencés pour coopérer avec une deuxième encoche radiale de la deuxième chape 110 que comportent les deuxièmes moyens d'indexation angulaire complémentaire 130.

Plus particulièrement, le tube-écrou 3 comporte des deuxièmes moyens d'arrêt axial 330, qui sont agencés pour coopérer avec des deuxièmes moyens complémentaires d'arrêt axial 1300 que comporte la charnière extérieure 10 au niveau de la deuxième chape 110. Ainsi la charnière résiste mieux à la torsion, ainsi répartie sur des zones massives des chapes.

Plus particulièrement encore, le deuxième bossage radial porte frontalement les deuxièmes moyens d'arrêt axial 330, et les deuxièmes moyens complémentaires d'arrêt axial 1300 de la deuxième chape 110 comportent une deuxième portée frontale au niveau en extrémité intérieure de la deuxième encoche radiale, laquelle est borgne, de la deuxième chape 110.

Plus particulièrement, la charnière extérieure 1 comporte, entre la première chape 11 et la deuxième chape 110, et tournés l'un vers l'autre, un premier ergot 17 saillant axialement d'une première face frontale intérieure 19 de la première chape 11 et comportant une première surface d'arrêt de butée en rotation 14, et un deuxième ergot 170 saillant axialement saillant axialement d'une deuxième face frontale intérieure 190 de la deuxième chape 110 et comportant une deuxième surface d'arrêt de butée en rotation 140. La première surface d'arrêt de butée en rotation 14 et la deuxième surface d'arrêt de butée en rotation 140 sont agencées pour coopérer en position de butée, dans la même position angulaire de la charnière intérieure 2 par rapport à la charnière extérieure 1, respectivement avec une première surface d'arrêt complémentaire de butée en rotation 24 et une deuxième surface d'arrêt complémentaire de butée en rotation 240 que comporte la charnière intérieure 2 de part et d'autre de la chape unique 21. Plus particulièrement, le premier ergot 17 comporte une première surface de guidage d'ergot 16, agencée pour guider le tube de guidage 4, et le deuxième ergot 170 comporte une deuxième surface de guidage d'ergot 160, agencée pour guider le tube-écrou 3.

Plus particulièrement encore, la première surface d'arrêt de butée en rotation 14 et la deuxième surface d'arrêt de butée en rotation 140 sont dans le prolongement l'une de l'autre, et la première surface d'arrêt complémentaire de butée en rotation 24 et la deuxième surface d'arrêt complémentaire de butée en rotation 240 sont dans le prolongement l'une de l'autre. Plus particulièrement encore, la première surface d'arrêt complémentaire de butée en rotation 24 et la deuxième surface d'arrêt complémentaire de butée en rotation 240 sont ménagées dans un premier dégagement 29 et un deuxième dégagement 290, qui limitent respectivement le débattement angulaire du premier ergot 17 et du deuxième ergot 170.

Avantageusement, pour réduire les contraintes et l'usure, le tube-écrou 3 et/ou le tube de guidage 4 est en polyamide 11 ou en polyamide 6-6 ou en polytétrafluoroéthylène ou en polyéthylène à haute densité.

Plus particulièrement, le premier alésage 12 et le deuxième alésage 120 de la charnière extérieure 1 comportent un revêtement intérieur en polyamide 11 ou en polyamide 6-6 ou en polytétrafluoroéthylène ou en polyéthylène à haute densité.

Plus particulièrement, le troisième alésage 26 de la charnière intérieure 2 comporte un revêtement intérieur en polyamide 11 ou en polyamide 6-6 ou en polytétrafluoroéthylène ou en polyéthylène à haute densité.

En somme, la charnière est réglable en vissant la vis qui la traverse, ce qui permet de régler la dureté de ce frein ou de cette friction mécanique, et l'agencement particulier du tube de guidage et du tube-écrou indexés en rotation permet une répartition optimale des contraintes dans la charnière, sans dépasser les limites en flexion et en torsion; le choix d'un tube de guidage et d'un tube-écrou en matériau à très bas coefficient de frottement, ou revêtus d'un tel matériau, améliore la tenue à l'usure.

Ainsi on dispose d'une charnière de très petites dimensions, à haute sécurité, qui permet son emploi dans des pièces de haute horlogerie ou de joaillerie.

## Revendications

1. Ensemble charnière d'horlogerie ou de bijouterie-joaillerie (100) comportant d'une part une charnière extérieure (1) avec une première chape (11) et une deuxième chape (110) solidaires d'une semelle extérieure (10) et comportant respectivement un premier alésage (12) et un deuxième alésage (120) alignés selon un axe (D), et d'autre part une charnière intérieure (2) avec une chape unique (21) solidaire d'une semelle intérieure (20) et insérable à jeu minimal entre ladite première chape (11) et ladite deuxième chape (110) et comportant un troisième alésage (26) apte à être aligné selon ledit axe (D) avec ledit premier alésage (12) et ledit deuxième alésage (120) dans une position de fonctionnement, où ladite charnière extérieure (1) et ladite charnière intérieure (2) sont montées pivotantes l'une par rapport à l'autre autour d'une vis (5), au travers, d'une part d'un tube de guidage (4) de ladite vis (5) agencé pour être inséré dans ledit premier alésage (12) et comportant des premiers moyens d'indexation angulaire (43) agencés pour coopérer avec des premiers moyens complémentaires d'indexation angulaire (13) que comporte ladite charnière extérieure (10) au niveau de ladite première chape (11), et d'autre part d'un tube-écrou (3) agencé pour être inséré dans ledit deuxième alésage (120), ladite vis (5) comportant une tête (51) pour son immobilisation axiale dans ledit tube de guidage (4) et un filetage (55) agencé pour coopérer avec un taraudage (35) que comporte ledit tube-écrou (3), la coopération entre ledit filetage (55) et ledit taraudage (35) permettant de régler le jeu ou le serrage axial entre ladite charnière extérieure (10) et ladite charnière intérieure (20), **caractérisé en ce que** ledit tube-écrou (3) comporte des deuxièmes moyens d'indexation angulaire (33) agencés pour coopérer avec des deuxièmes moyens complémentaires d'indexation angulaire (133) que comporte ladite charnière extérieure (10) au niveau de ladite deuxième chape (110).

2. Ensemble charnière d'horlogerie ou de bijouterie-joaillerie (100) selon la revendication 1, **caractérisé en ce que** ledit tube de guidage (4) comporte des premiers moyens d'arrêt axial (430) agencés pour coopérer avec des premiers moyens complémentaires d'arrêt axial (130) que comporte ladite charnière extérieure (10) au niveau de ladite première chape (11).

3. Ensemble charnière d'horlogerie ou de bijouterie-joaillerie (100) selon la revendication 2, **caractérisé en ce que** ledit tube de guidage (4) comporte un premier corps cylindrique (46) insérable dans ledit premier alésage (12) de ladite première chape (11), et **en ce que** lesdits premiers moyens d'indexation angulaire (43) comportent un premier bossage radial dudit tube de guidage (4) et sont saillants radialement par rapport audit premier corps cylindrique (46), et sont agencés pour coopérer avec une première encoche radiale de ladite première chape (11) que comportent lesdits premiers moyens d'indexation angulaire complémentaire (13).

4. Ensemble charnière d'horlogerie ou de bijouterie-joaillerie (100) selon les revendications 2 et 3, **caractérisé en ce que** ledit premier bossage radial porte frontalement lesdits premiers moyens d'arrêt axial (430), et **en ce que** lesdits premiers moyens complémentaires d'arrêt axial (130) de ladite première chape (11) comportent une première portée frontale au niveau en extrémité intérieure de ladite première encoche radiale, laquelle est borgne, de ladite première chape (11).

5. Ensemble charnière d'horlogerie ou de bijouterie-joaillerie (100) selon l'une des revendications 1 à 4, **caractérisé en ce que** ledit tube-écrou (3) comporte un deuxième corps cylindrique (36) insérable dans ledit deuxième alésage (120) de ladite deuxième chape (110), et **en ce que** lesdits deuxièmes moyens d'indexation angulaire (33) comportent un deuxième bossage radial dudit tube-écrou (3) et sont saillants par rapport audit deuxième corps cylindrique (36), et sont agencés pour coopérer avec une deuxième encoche radiale de ladite deuxième chape (110) que comportent lesdits deuxièmes moyens d'indexation angulaire complémentaire (130).

6. Ensemble charnière d'horlogerie ou de bijouterie-joaillerie (100) selon l'une des revendications 1 à 5, **caractérisé en ce que** ledit tube-écrou (3) comporte des deuxièmes moyens d'arrêt axial (330) agencés pour coopérer avec des deuxièmes moyens complémentaires d'arrêt axial (1300) que comporte ladite charnière extérieure (10) au niveau de ladite deuxième chape (110).

7. Ensemble charnière d'horlogerie ou de bijouterie-joaillerie (100) selon les revendications 5 et 6, **caractérisé en ce que** ledit deuxième bossage radial porte frontalement lesdits deuxièmes moyens d'arrêt axial (330), et **en ce que** lesdits deuxièmes moyens complémentaires d'arrêt axial (1300) de ladite deuxième chape (110) comportent une deuxième portée frontale au niveau en extrémité intérieure de ladite deuxième encoche radiale, laquelle est borgne, de ladite deuxième chape (110).

8. Ensemble charnière d'horlogerie ou de bijouterie-joaillerie (100) selon l'une des revendications 1 à 7, **caractérisé en ce que** ladite charnière extérieure (1) comporte, entre ladite première chape (11) et ladite deuxième chape (110), et tournés l'un vers l'autre, un premier ergot (170) saillant axialement d'une première face frontale intérieure (19) de ladite première chape (11) et comportant une première surface d'arrêt de butée en rotation (14), et un deuxième ergot (171) saillant axialement saillant axialement d'une deuxième face frontale intérieure (190) de ladite deuxième chape (110) et comportant une deuxième surface d'arrêt de butée en rotation (140), ladite première surface d'arrêt de butée en rotation (14) et ladite deuxième surface d'arrêt de butée en rotation (140) étant agencées pour coopérer en position de butée, dans la même position angulaire de ladite charnière intérieure (2) par rapport à ladite charnière extérieure (1), respectivement avec une première surface d'arrêt complémentaire de butée en rotation (24) et une deuxième surface d'arrêt complémentaire de butée en rotation (240) que comporte ladite charnière intérieure (2) de part et d'autre de ladite chape unique (21).

9. Ensemble charnière d'horlogerie ou de bijouterie-joaillerie (100) selon l'une des revendications 1 à 8, **caractérisé en ce que** ledit tube-écrou (3) et/ou ledit tube de guidage (4) est en polyamide 11 ou en polyamide 6-6 ou en polytétrafluoroéthylène ou en polyéthylène à haute densité.

10. Ensemble charnière d'horlogerie ou de bijouterie-joaillerie (100) selon l'une des revendications 1 à 9, **caractérisé en ce que** ledit premier alésage (12) et ledit deuxième alésage (120) de ladite charnière extérieure (1) comportent un revêtement intérieur en polyamide 11 ou en polyamide 6-6 ou en polytétrafluoroéthylène ou en polyéthylène à haute densité.

11. Ensemble charnière d'horlogerie ou de bijouterie-joaillerie (100) selon l'une des revendications 1 à 10, **caractérisé en ce que** ledit troisième alésage (26) de ladite charnière intérieure (2) comporte un revêtement intérieur en polyamide 11 ou en polyamide 6-6 ou en polytétrafluoroéthylène ou en polyéthylène à haute densité.

## Patentansprüche

1. Scharnierbaugruppe für Uhren oder Schmuckstücke (100), umfassend ein äußeres Scharnier (1) mit einer ersten Lasche (11) und einer zweiten Lasche (110), die mit einer Außensohle (10) fest verbunden sind und jeweils eine erste Bohrung (12) bzw. eine zweite Bohrung (120) aufweisen, die entlang einer Achse (D) ausgerichtet sind, und ferner ein inneres Scharnier (2) mit einer einzigen Lasche (21), die mit einer Innensohle (20) fest verbunden ist und mit minimalem Spiel zwischen die genannte erste Lasche (11) und die genannte zweite Lasche (110) einsetzbar ist und eine dritte Bohrung (26) aufweist, die in einer Betriebsstellung entlang der genannten Achse (D) mit der genannten ersten Bohrung (12) und der genannten zweiten Bohrung (120) ausrichtbar ist, wobei das äußere Scharnier (1) und das innere Scharnier (2) schwenkbar zueinander um eine Schraube (5) gelagert sind, und zwar einerseits über ein Führungsrohr (4) der genannten Schraube (5), das so ausgebildet ist, dass es in die genannte erste Bohrung (12) einsetzbar ist und erste Mittel zur Winkelindexierung (43) aufweist, die zum Zusammenwirken mit ersten komplementären Mitteln zur Winkelindexierung (13) eingerichtet sind, die an der Außensohle (10) im Bereich der genannten ersten Lasche (11) vorgesehen sind, und andererseits über ein Mutternrohr (3), das so ausgebildet ist, dass es in die genannte zweite Bohrung (120) einsetzbar ist, wobei die genannte Schraube (5) einen Kopf (51) zur axialen Fixierung in dem genannten Führungsrohr (4) und ein Gewinde (55) aufweist, das zum Zusammenwirken mit einem Innengewinde (35) eingerichtet ist, das das genannte Mutternrohr (3) aufweist, wobei durch das Zusammenwirken zwischen dem genannten Gewinde (55) und dem genannten Innengewinde (35) das axiale Spiel oder die axiale Verspannung zwischen der Außensohle (10) und der Innensohle (20) einstellbar ist, **dadurch gekennzeichnet, dass** das genannte Mutternrohr (3) zweite Mittel zur Winkelindexierung (33) aufweist, die zum Zusammenwirken mit zweiten komplementären Mitteln zur Winkelindexierung (133) eingerichtet sind, die an der Außensohle (10) im Bereich der genannten zweiten Lasche (110) vorgesehen sind.

2. Scharnierbaugruppe für Uhren oder Schmuckstücke (100) nach Anspruch 1, **dadurch gekennzeichnet, dass** das genannte Führungsrohr (4) erste axiale Anschlagmittel (430) aufweist, die zum Zusammenwirken mit ersten komplementären axialen Anschlagmitteln (130) eingerichtet sind, die an der Außensohle (10) im Bereich der genannten ersten Lasche (11) vorgesehen sind.

3. Scharnierbaugruppe für Uhren oder Schmuckstücke (100) nach Anspruch 2, **dadurch gekennzeichnet, dass** das genannte Führungsrohr (4) einen ersten zylindrischen Körper (46) aufweist, der in die genannte erste Bohrung (12) der genannten ersten Lasche (11 ) einsetzbar ist, und dass die genannten ersten Mittel zur Winkelindexierung (43) einen ersten radialen Vorsprung des genannten Führungsrohrs (4) umfassen, der gegenüber dem genannten ersten zylindrischen Körper (46) radial vorspringt und zum Zusammenwirken mit einer ersten radialen Ausnehmung der genannten ersten Lasche (11) eingerichtet ist, die von den genannten ersten komplementären Mitteln zur Winkelindexierung (13) bereitgestellt wird.

4. Scharnierbaugruppe für Uhren oder Schmuckstücke (100) nach den Ansprüchen 2 und 3, **dadurch gekennzeichnet, dass** der genannte erste radiale Vorsprung stirnseitig die genannten ersten axialen Anschlagmittel (430) trägt und dass die genannten ersten komplementären axialen Anschlagmittel (130) der genannten ersten Lasche (11) eine erste Stirnauflage im Bereich des inneren Endes der genannten ersten radialen Ausnehmung bilden, welche als Sackausnehmung der genannten ersten Lasche (11) ausgebildet ist.

5. Scharnierbaugruppe für Uhren oder Schmuckstücke (100) nach einem der Ansprüche 1 bis 4, **dadurch gekennzeichnet, dass** das genannte Mutternrohr (3) einen zweiten zylindrischen Körper (36) aufweist, der in die genannte zweite Bohrung (120) der genannten zweiten Lasche (110) einsetzbar ist, und dass die genannten zweiten Mittel zur Winkelindexierung (33) einen zweiten radialen Vorsprung des genannten Mutternrohrs (3) umfassen, der gegenüber dem genannten zweiten zylindrischen Körper (36) radial vorspringt und zum Zusammenwirken mit einer zweiten radialen Ausnehmung der genannten zweiten Lasche (110) eingerichtet ist, die von den genannten zweiten komplementären Mitteln zur Winkelindexierung (130) bereitgestellt wird.

6. Scharnierbaugruppe für Uhren oder Schmuckstücke (100) nach einem der Ansprüche 1 bis 5, **dadurch gekennzeichnet, dass** das genannte Mutternrohr (3) zweite axiale Anschlagmittel (330) aufweist, die zum Zusammenwirken mit zweiten komplementären axialen Anschlagmitteln (1300) eingerichtet sind, die an der Außensohle (10) im Bereich der genannten zweiten Lasche (110) vorgesehen sind.

7. Scharnierbaugruppe für Uhren oder Schmuckstücke (100) nach den Ansprüchen 5 und 6, **dadurch gekennzeichnet, dass** der genannte zweite radiale Vorsprung stirnseitig die genannten zweiten axialen Anschlagmittel (330) trägt und dass die genannten zweiten komplementären axialen Anschlagmittel (1300) der genannten zweiten Lasche (110) eine zweite Stirnauflage im Bereich des inneren Endes der genannten zweiten radialen Ausnehmung bilden, welche als Sackausnehmung der genannten zweiten Lasche (110) ausgebildet ist.

8. Scharnierbaugruppe für Uhren oder Schmuckstücke (100) nach einem der Ansprüche 1 bis 7, **dadurch gekennzeichnet, dass** das genannte äußere Scharnier (1) zwischen der genannten ersten Lasche (11) und der genannten zweiten Lasche (110) und einander zugewandt einen ersten Zapfen (170) aufweist, der von einer ersten inneren Stirnfläche (19) der genannten ersten Lasche (11) axial vorspringt und eine erste Anschlagfläche für die Drehbegrenzung (14) aufweist, und einen zweiten Zapfen (171), der von einer zweiten inneren Stirnfläche (190) der genannten zweiten Lasche (110) axial vorspringt und eine zweite Anschlagfläche für die Drehbegrenzung (140) aufweist, wobei die genannte erste Anschlagfläche für die Drehbegrenzung (14) und die genannte zweite Anschlagfläche für die Drehbegrenzung (140) so eingerichtet sind, dass sie in einer Anschlagstellung, in derselben Winkelstellung des genannten inneren Scharniers (2) gegenüber dem genannten äußeren Scharnier (1), jeweils mit einer ersten komplementären Anschlagfläche für die Drehbegrenzung (24) bzw. mit einer zweiten komplementären Anschlagfläche für die Drehbegrenzung (240) zusammenwirken, die das genannte innere Scharnier (2) auf beiden Seiten der genannten einzigen Lasche (21) aufweist.

9. Scharnierbaugruppe für Uhren oder Schmuckstücke (100) nach einem der Ansprüche 1 bis 8, **dadurch gekennzeichnet, dass** das genannte Mutternrohr (3) und/oder das genannte Führungsrohr (4) aus Polyamid 11 oder Polyamid 6-6 oder Polytetrafluorethylen oder Polyethylen hoher Dichte besteht.

10. Scharnierbaugruppe für Uhren oder Schmuckstücke (100) nach einem der Ansprüche 1 bis 9, **dadurch gekennzeichnet, dass** die genannte erste Bohrung (12) und die genannte zweite Bohrung (120) des genannten äußeren Scharniers (1) jeweils eine Innenbeschichtung aus Polyamid 11 oder Polyamid 6-6 oder Polytetrafluorethylen oder Polyethylen hoher Dichte aufweisen.

11. Scharnierbaugruppe für Uhren oder Schmuckstücke (100) nach einem der Ansprüche 1 bis 10, **dadurch gekennzeichnet, dass** die genannte dritte Bohrung (26) des genannten inneren Scharniers (2) eine Innenbeschichtung aus Polyamid 11 oder Polyamid 6-6 oder Polytetrafluorethylen oder Polyethylen hoher Dichte aufweist.

## Claims

1. Horological or jewellery hinge assembly (100) including, on the one hand, an outer hinge (1) with a first knuckle (11) and a second knuckle (110) which are integral with an outer base plate (10) and including respectively a first bore (12) and a second bore (120) which are aligned along an axis (D), and on the other hand an inner hinge (2) with a single knuckle (21) integral with an inner base plate (20) and insertable, with minimum clearance, between said first knuckle (11) and said second knuckle (110) and including a third bore (26) able to be aligned along said axis (D) with said first bore (12) and said second bore (120) in an operating position, where said outer hinge (1) and said inner hinge (2) are mounted so as to pivot relative to each other about a screw (5), through, on the one hand, a guide tube (4) for said screw (5) arranged to be inserted into said first bore (12) and including first angular indexing means (43) arranged to cooperate with complementary first angular indexing means (13) that said outer hinge (10) includes at said first knuckle (11), and secondly a tube-nut (3) intended to be inserted into said second bore (120), said screw (5) including a head (51) for axial immobilisation thereof in said guide tube (4) and a thread (55) intended to cooperate with an internal thread (35) in said tube-nut (3), the cooperation between said thread (55) and said internal thread (35) making it possible to adjust the axial clearance or tightness between said outer hinge (10) and said inner hinge (20), **characterised in that** said tube-nut (3) includes second angular indexing means (33) arranged to cooperate with complementary second angular indexing means (133) which said outer hinge (10) includes at said second knuckle (110).

2. Horological or jewellery hinge assembly (100) according to claim 1, **characterised in that** said guide tube (4) includes first axial stop means (430) arranged to cooperate with complementary first axial stop means (130) which said external hinge (10) includes at said first knuckle (11).

3. Horological or jewellery hinge assembly (100) according to claim 2, **characterised in that** said guide tube (4) includes a first cylindrical body (46) insertable into said first bore (12) in said first knuckle (11), and **in that** said first angular indexing means (43) include a first radial boss of said guide tube (4) and project radially relative to said first cylindrical body (46), and are arranged to cooperate with a first radial notch in said first knuckle (11) which said complementary first angular indexing means (13) include.

4. Horological or jewellery hinge assembly (100) according to claims 2 and 3, **characterised in that** said first radial boss carries said first axial stop means (430) at the front, and **in that** said complementary first axial stop means (130) of said first knuckle (11) include a first front bearing surface at the inner end of said first radial notch in said first knuckle (11) which notch is blind.

5. Horological or jewellery hinge assembly (100) according to one of claims 1 to 4, **characterised in that** said tube-nut (3) includes a second cylindrical body (36) insertable into said second bore (120) in said second knuckle (110), and **in that** said second angular indexing means (33) include a second radial boss of said tube-nut (3) and project relative to said second cylindrical body (36), and are arranged to cooperate with a second radial notch in said second knuckle (110) which said complementary second angular indexing means (130) include.

6. Horological or jewellery hinge assembly (100) according to one of claims 1 to 5, **characterised in that** said tube-nut (3) includes second axial stop means (330) arranged to cooperate with complementary second axial stop means (1300) that said external hinge (10) includes at said second knuckle (110).

7. Horological or jewellery hinge assembly (100) according to claims 5 and 6, **characterised in that** said second radial boss carries said second axial stop means (330) at the front, and **in that** said complementary second axial stop means (1300) of said second knuckle (110) include a second front bearing surface at the inner end of said second radial notch in said second knuckle (110), which notch is blind.

8. Horological or jewellery hinge assembly (100) according to one of claims 1 to 7, **characterised in that** said external hinge (1) includes, between said first knuckle (11) and said second knuckle (110), and facing one another, a first lug (170) projecting axially from a first inner front face (19) of said first knuckle (11) and including a first rotational abutment surface (14), and a second lug (171) projecting axially from a second inner front face (190) of said second knuckle (110) and including a second rotational abutment surface (140), said first rotational abutment surface (14) and said second rotational abutment surface (140) being arranged to cooperate in the stop position, when said inner hinge (2) is in the same angular position relative to said outer hinge (1), respectively with a complementary first rotational abutment surface (24) and a complementary second rotational abutment surface (240) which said inner hinge (2) includes on either side of said single knuckle (21).

9. Horological or jewellery hinge assembly (100) according to one of claims 1 to 8, **characterised in that** said tube-nut (3) and/or said guide tube (4) is made of polyamide 11 or polyamide 6-6 or polytetrafluoroethylene or high-density polyethylene.

10. Horological or jewellery hinge assembly (100) according to one of claims 1 to 9, **characterised in that** said first bore (12) and said second bore (120) of said outer hinge (1) include an inner coating of polyamide 11 or polyamide 6-6 or polytetrafluoroethylene or high-density polyethylene.

11. Horological or jewellery hinge assembly (100) according to one of claims 1 to 10, **characterised in that** said third bore (26) of said inner hinge (2) includes an inner coating of polyamide 11 or polyamide 6-6 or polytetrafluoroethylene or high-density polyethylene.
